(19) Europäisches Patentamt
European Patent Office
Office européen des brevets

(11) **EP 4 393 765 A1**

(12) **EUROPEAN PATENT APPLICATION**

(43) Date of publication:
**03.07.2024 Bulletin 2024/27**

(21) Application number: **22217291.8**

(22) Date of filing: **30.12.2022**

(51) International Patent Classification (IPC):
**B60L 53/80** (2019.01)    **H02J 7/00** (2006.01)

(52) Cooperative Patent Classification (CPC):
**B60L 53/80; H02J 7/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Honda Research Institute Europe GmbH**
**63073 Offenbach/Main (DE)**

(72) Inventors:
• **Limmer, Steffen**
  **63073 Offenbach/Main (DE)**
• **Rodemann, Dr. Tobias**
  **63073 Offenbach/Main (DE)**

(74) Representative: **Beder, Jens**
**Mitscherlich PartmbB**
**Patent- und Rechtsanwälte**
**Karlstraße 7**
**80333 München (DE)**

(54) **PREDICTION-BASED BATTERY SWAPPING CHARGING CONTROL WITH PRE-CHARGE BATTERY LEVELS**

(57)    A method and system for charging control of a plurality of batteries in a battery swapping station is provided. The method comprises steps of predicting a required quantity of fully charged batteries and adding a safety margin to determine an initial number of fully charged batteries at a given time, and setting a lower threshold for a number of fully charged batteries at the given time. The method comprises a further step of charging a plurality of batteries to a full charge level to provide the initial number of fully charged batteries, and a plurality of batteries to at least a first pre-charge level, the first pre-charge level being a lower state of charge than the fully charged level. Still further, the method comprises a step of comparing the threshold with an actual number of fully charged batteries, and replenishing, the number of fully charged batteries by charging at least some batteries from the first pre-charge level to the fully charged level.

EP 4 393 765 A1

Fig. 1

**Description**

The present invention relates to prediction-based battery swapping charging control in a battery swapping station. The present invention provides a method for charging control of a plurality of batteries in a battery swapping station, a system, a computer program, and a recording medium.

One of the factors of environmental pollution is vehicle exhaust emission. Electric cars are the prospective solution to govern vehicle emissions. With the recent development of electric vehicles (EVs), there is a growing need to recharge the batteries for electric vehicles regularly. Direct recharging electric vehicles are quite common to replenish the batteries, however, is time-consuming. Alternatively, battery swapping is a quick solution to replenish the energy of electric vehicles.

Battery swapping stations allow electric vehicles to exchange their partially or fully discharged batteries with fully charged ones. Returned batteries are recharged in the station and can be later given out to other EVs. This reduces the issue of long charging times since the EVs can be used while the batteries are being recharged. Public battery swapping stations are typically equipped with multiple batteries and serve multiple customers. Since the swapping station operator and not the EV drivers typically own the batteries, the maintenance cost resulting from the degradation of batteries can account for a large part of the operating cost of the swapping stations.

Generally, charging and discharging a battery leads to a degradation of the battery meaning that its capacity reduces over time. Also in an idle state, a battery degrades over time, usually known as calendar aging, and this degradation increases with an increasing state of charge (SOC) of the battery. Thus, when a battery is recharged in a battery swapping station, ideally it must be recharged as late as possible, meaning that it never has a SOC higher than that needed to satisfy all user demands. However, a problem is that the exact future demand is unknown, i.e., the time when a user requires a full battery is usually not known. A typical way to deal with this issue is the charging of batteries based on a prediction of the future swapping demand. To consider uncertainties in the prediction, typically not only the mean or expected value of the demand in time step t is predicted, but also the corresponding standard deviation $\sigma_t$. A time step could be, for example, an hour. The predicted mean and standard deviation are then considered by ensuring that $\mu_t + X * \sigma_t$ batteries are fully charged at the beginning of time step $t$ with a predefined parameter X. It can be assumed that swapping station operators are typically interested in a high-quality level of service and thus prefer a conservative setting (i.e. a high value) for X. A high value for X would mean that most of the time significantly more batteries than required are fully charged, leading to an unnecessary high battery degradation.

Conventional approaches for the control of the charging process in battery swapping stations consider uncertainties. A robust or stochastic optimization approach is to compute a charging plan, which is optimal with respect to the average or worst objective over multiple scenarios of the future. Another approach is to model charging under uncertainties as a Markov decision process (MDP) and to solve the MDP with approaches like dynamic programming, heuristics, or reinforcement learning. These approaches typically do not only consider uncertainties in the future swapping demand but also in other operating conditions like future energy prices. Furthermore, they typically plan the battery charging multiple time steps ahead.

It is thus an object of the present invention to provide a method for charging control of a plurality of batteries in a battery swapping station in a manner such that fewer batteries are fully charged while still providing a high quality of service. Similarly, an object of the present invention is also to provide a system for charging control of a plurality of batteries in a battery swapping station. A further object is to provide a computer program and a computer-readable recording medium for charging control of a plurality of batteries in a battery swapping station.

In order to solve the problems above, a method according to a first independent claim, a system according to a second independent claim, a computer program according to a third independent claim, and a computer readable recording medium for the same purpose according to a fourth independent claim are provided.

According to a first aspect of the present invention, a method for charging control of a plurality of batteries in a battery swapping station is provided. The method comprises steps of predicting a required quantity of fully charged batteries and adding a safety margin to determine an initial number of fully charged batteries at a given time, and setting a lower threshold for a number of fully charged batteries. The method comprises a further step of charging a plurality of batteries to a full charge level to provide the initial number of fully charged batteries, and a plurality of batteries to at least a first pre-charge level, the first pre-charge level being a lower state of charge than the fully charged level. Still further, the method comprises a step of comparing the threshold with an actual number of fully charged batteries, and replenishing, the number of fully charged batteries by charging at least some batteries from the first pre-charge level to the fully charged level.

The method of the present invention requires fewer fully charged batteries by employing the pre-charge levels in order to decrease the average SOC of the batteries in the swapping station while still being able to satisfy user demands with high probability. The at least one pre-charge level ensures that in a short period of time further fully charged batteries are available when the number of fully charged batteries falls below the threshold. A safety margin of fully charged batteries is advantageously added to the required (mean) quantity of fully charged batteries so that when the demand exceeds the predicted required number of fully charged at a given time, the swapping station would still have additional fully charged batteries available to meet the demand. However, the safety margin can be significantly smaller than for conventional systems. If the battery swapping station runs out of fully charged batteries and demand for swapping arises (for which the threshold is an indicator), batteries from the first pre-charge level can be charged to a full charge state to meet the demand. For the time that is needed to fully charge the batteries from the first pre-charge level, additional fully charged batteries are available. Having batteries in the first pre-charge level allows the swapping station to replenish the stock of fully charged batteries without significantly affecting the battery life. Further, when a number of fully charged batteries at a given time falls below the threshold, the swapping station reacts by charging batteries from the first pre-charge level to full charge to reach or exceed the threshold. For example, the SOC of the first pre-charge level may preferably be 95% SOC, 90% SOC, or 85% SOC. The SOC of the first pre-charge level may vary from these example values. Other values may prove to be suited.

Preferably, the method further comprises the steps of charging a plurality of batteries to a second pre-charge level being a state of charge below the state of charge of the first pre-charge level and replenishing the number of batteries charged to the first pre-charge level when batteries from the first pre-charge level are charged to the fully charged level. By having a number of batteries charged to different pre-charge levels, an unexpected demand for a fully charged battery can be met quickly. Since fewer batteries are maintained in a fully charged state in the battery swapping station degradation of the batteries can be avoided or at least reduced. Further, the number of batteries in the first pre-charge level can also be reduced, resulting in reduced aging for an additional number of batteries. In case the demand is higher than expected, the batteries from the second pre-charge level are used to compensate the number of batteries that are fully charged from the first pre-charge level.

Preferably, the method further comprises the steps of charging a plurality of batteries to a third pre-charge level being a state of charge level below the second pre-charge level and used to replenish the second pre-charge level if the plurality of batteries from the second pre-charge level is used to replenish the first pre-charge level. Further preferably, a fourth pre-charge level and/or further pre-charge levels are maintained in the battery swapping station. The SOC of each pre-charge level is lower than that of the previous pre-charge level and higher than that of the successive pre-charge level. Batteries in each pre-charge level are used to replenish the stock of the previous (higher) pre-charge level. Maintaining batteries in multiple pre-charge levels allows a quick replenishment of fully charged batteries when the number of available fully charged batteries drops below the threshold thereby providing a high-quality level of service for the customer in the battery swapping station without degrading the batteries. Using such a hierarchy of charge levels reduces the overall aging of the batteries while at the same time ensuring that in a short period of time fully charged batteries are available. So it is possible to use the time in which the further fully charged batteries are swapped to replenish the reserve of fully charged batteries, simultaneously of the first pre-charge level, second pre-charge level and so on. It is to be noted that this effect, which is already present for a single, first pre-charge level, is further improved by increasing the number of different charge levels.

Preferably, the method periodically determines the required quantity of fully charged batteries and/or the safety margin. Advantageously a stock of fully charged batteries is updated periodically.

Preferably, the method enables that the threshold may be pre-set by a user and/or calculated based on historical data. Advantageously, the data may be based on week, holiday seasons, weekends, location of the charging station, or a combination thereof. Therefore, the method according to the present invention allows meeting the customer need by overseeing customers' movement through a period.

According to a second aspect of the present invention, a system for charging control of a plurality of batteries in a battery swapping station is provided. The system comprises a prediction module configured to predict a required quantity of fully charged batteries and to add a safety margin to determine an initial number of fully charged batteries at a given time. The system further comprises a charging manager module configured to receive a threshold for a number of fully charged batteries at the given time from an operator, for example. Furthermore, the system comprises a charging manager configured to receive the predicted required quantity of fully charged batteries from the prediction module and compare the threshold with an actual number of fully charged batteries. The charging manager is further configured to replenish, at least partially, the number of fully charged batteries by charging the batteries from the first pre-charge level to the fully charged level. This is achieved by the charging manager instructing the control and monitoring module to charge a plurality of batteries to the fully charged level to provide the initial number of fully charged batteries, and a plurality of batteries to at least a first pre-charge level, the first pre-charge level being a lower state of charge than the fully charged level. All decisions regarding the charging strategy, the timing and determination of required amounts of batteries to be charged to which charge level are thus made by the charging manager. It is only required that the charging manager is in communicative connection with the control and monitoring module that is instructed by the charging manager to actually execute the charging of the batteries according to the decisions made by the charging manager. The system allows realizing the method of the first aspect in the battery swapping station. Advantageously, the system is simple and allows easy implementation while significantly reducing the degradation of a plurality of batteries.

Preferably, the control and monitoring module of the system is configured to obtain the actual number of fully charged batteries, charge states of the plurality of batteries in the swapping station, and/or serial numbers of the plurality of batteries in the swapping station. Further, the control and monitoring module may also record battery temperature, charging rate, and/or discharging rate. For example, a new battery may have a higher swap priority than the swap priority of an old battery since the new battery usually has fewer charge cycles. Therefore, the overall life expectancy of the entirety of batteries in the swapping station can be optimized. This in turn allows a prediction of the battery life expectancy. Thus, the batteries in the swapping station can be allotted to an appropriate pre-charge level or replaced based on its life expectancy.

Preferably, the system comprises a logging module configured to periodically receive the actual number of fully charged batteries from the control and monitoring module, the threshold, the charge state of the plurality of batteries in the swapping station, and/or serial numbers of the plurality of batteries in the swapping station. The logging module may receive and record battery temperature, charging rate, and/or discharging rate from the control and monitoring module. The logging module is further configured to store the received information over a period of time in a database. Advantageously, this allows tracking the battery life, performance, charging/discharging rate of each battery.

Preferably, the charging manager is configured to receive the charge state of plurality of batteries from the control and monitoring module or the logging module.

Preferably, the charge manager is configured to charge a plurality of batteries to a second pre-charge level being a state of charge below the state of charge of the first pre-charge level. Optionally, the charge manager is configured to replenish the number of batteries charged to the first pre-charge level when batteries from the first pre-charge level are charged to the fully charged level. In the same manner, a third pre-charge level, a fourth pre-charge level, and maybe even further battery levels can be employed in the system to establish a system with a hierarchy of charge levels. The SOC of each additional pre-charge level is lower than the previous (existing) pre-charge level, namely the third pre-charge level has a SOC below the second pre-charge level, the fourth below the third and so on. Advantageously, batteries are charged to different pre-charge levels and allow only the required number of batteries to be in the fully charged at a given time. This helps to improve the battery life expectancy. The batteries are charged stepwise to the next higher charge level.

Preferably, the logging module, the prediction module, and/or the charging manager module are inside or outside the swapping station. Further, the logging module, the prediction module, and/or the charging manager module may be in the form of a cloud service.

According to a third aspect of the present invention, a computer program to execute the method of the first aspect of the invention is provided. The computer program is configured to control charging of a plurality of batteries in a battery swapping station according to the inventive method comprising the steps of: predicting a required quantity of fully charged batteries and adding a safety margin to determine an initial number of fully charged batteries at a given time; setting a lower threshold for a number of fully charged batteries; charging a plurality of batteries to a fully charged level to provide the initial number of fully charged batteries, and a plurality of batteries to at least a first pre-charge level, the first pre-charge level being a lower state of charge than the fully charged level; comparing the threshold with an actual number of fully charged batteries; and replenishing, at least partially, the number of fully charged batteries by charging the batteries from the first pre-charge level to the fully charged level.

According to a fourth aspect of the present invention, a computer-readable recording medium on which the computer program according to the third aspect is recorded.

Exemplary embodiments of the invention are now further explained with respect to the drawings by way of example only, and not for limitation. In the drawings:

Fig. 1    shows an exemplary flowchart of a method for charging control of a plurality of batteries in a battery swapping station according to the present invention;

Fig. 2    shows an exemplary embodiment of a schematic of batteries with precharge levels in the battery swapping station according to the present invention; and

Fig. 3    shows an exemplary embodiment of a system for charging control of a plurality of batteries in a battery swapping station according to the present invention.

Reference will now be made in detail to the embodiments of the present invention, examples of which are illustrated in the accompanying drawings. However, the following embodiments of the present invention may be modified, and the scope of the present invention is not limited by the following embodiments. Reference signs for similar entities in different embodiments are partially omitted but denote same element or features.

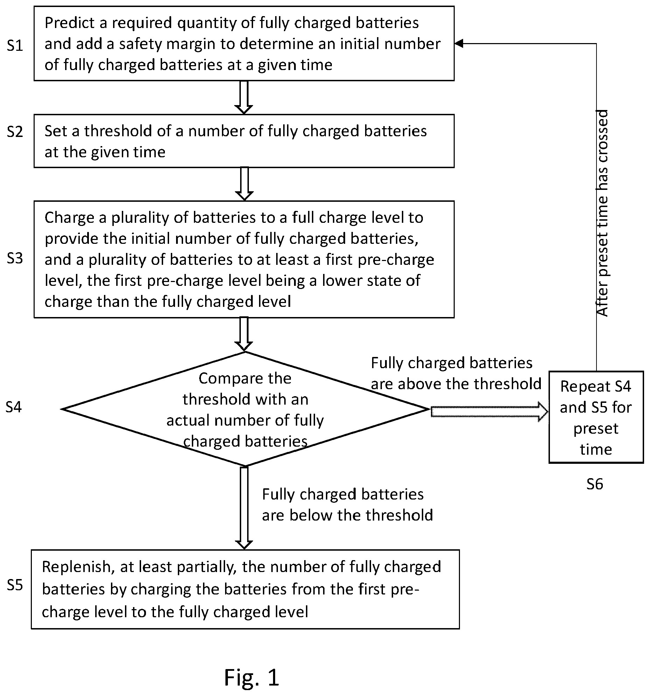

In Fig. 1 an exemplary embodiment of the method according to the first aspect of the present invention is illustrated as a flow chart. The method shows the main steps of charging control of a plurality of batteries in a battery swapping station according to the present invention. The method comprises the steps a) predicting (S1) a required quantity of fully charged batteries and adding a safety margin to determine an initial number of fully charged batteries at a given time; b) setting (S2) a lower threshold for the number of fully charged batteries; c) charging (S3) a plurality of batteries to a fully charged level to provide the initial number of fully charged batteries, and a plurality of batteries to at least a first pre-charge level, the first pre-charge level being a lower state of charge than the fully charged level; d) comparing (S4) the threshold with the actual number of fully charged batteries; and when actual number of fully charged batteries falls below the threshold e) replenishing (S5), at least partially, the number of fully charged batteries by charging the batteries from the first pre-charge level to the fully charged level.

Optionally, when the actual number of fully charged batteries is equal to or above the threshold at step S4, the system repeats steps S4 and, in case the number of fully charged batteries falls below the threshold, S5 for a preset time. When the preset time has crossed the system goes back to step S1.

In order to avoid degradation of batteries, only the required (predicted) number of batteries plus a safety margin are fully charged. Therefore, an unnecessary number of fully charged batteries being stored for a longer period of time is avoided. In case the demand lets the number of fully charged batteries fall below the threshold, the battery swapping station must be able to restock the number of fully charged batteries as quickly as possible. A threshold of fully charged batteries at the given time is set. In order to replenish, at least partially, the actual number of fully charged batteries when need arises, batteries of at least a first pre-charge level are kept in the battery swapping station. For example, the first pre-charge level may be set at 95%, 90%, or 85% state of charge. Generally speaking, the first pre-charge level may be set at any state of charge below the 100% state of charge. Batteries of a second pre-charge level and/or a third pre-charge level and/or further pre-charge levels may be kept in the battery swapping station. Each pre-charge level has a SOC below the previous (higher) pre charge level. The intervals between the charge levels may be chosen to be the same, or different, for example larger for every additionally added (lower) pre-charge level.

The charging of the batteries in the station can be controlled at least in an on/off state, meaning that either a battery can be charged with a constant maximum power $P^{max}$ or with a power of zero kW (i.e., the battery is idle). This does not exclude the battery swapping stations allowing the control with more than these two power levels.

Furthermore, without loss of generality, it is assumed that only batteries with an SOC of 100% can be handed out to customers. In case that batteries can be handed out if their SOC is above a certain value, which is less than 100%, the described approach can be easily adapted.

The time is discretized into time steps of equal length $\Delta t$ (e.g., one hour) and it is possible to charge a battery from an SOC of 0% to an SOC of 100% within $\Delta t$ time units. Each time step is further discretized into substeps of length $\Delta \tau$ (e.g., one minute). According to the invention, managing the charging of batteries in a time step $t$ is based on predictions of the mean values $\mu_t$ and $\mu_{t+1}$ and of the standard deviations $\sigma_t$ and $\sigma_{t+1}$ of the number of swapping in the current and next time step, respectively.

It is proposed to employ the pre-charge levels in order to decrease the average SOC of the batteries in the swapping station while still being able to satisfy user demands with high probability. Thereby a smaller number of batteries are charged to full SOC right from the beginning but backup batteries (at least for one pre-charge level) are kept at an SOC close to 100%, which can be quickly fully charged if required.

The total number of batteries is assigned to $M$ pre-charge levels $B_1, B_2,...,B_M$, where batteries at $B_1$ pre-charge level have an SOC of $S_1 = 100\%$, batteries at pre-charge level $B_2$ have an SOC of at least $S_2 < 100\%$, batteries at pre-charge level $B_3$ have an SOC of at least $S_3 < S_2$, and so on. Apparently, all batteries in a pre-charge level $B_i$, are also in pre-charge level $B_i + 1$.

In each substep $\tau$ of time step t, the following control logic is executed: Let $S_\tau$ denote the number of swappings which took place in time step $t$ up to substep $\tau$. If the number $N_{1,\tau}$ of batteries in level $B_1$ is lower than

$$N'_{1,\tau} = \max\{\mu_t - S_\tau + X_1 \cdot (\sigma_t + \sigma_{t+1}), T\} + \mu_{t+1}, \qquad (1)$$

where $X_1$ and $T$ are predefined parameters, then the $N'_{1,\tau}$ - $N_{1,\tau}$, batteries with the highest SOC, which are not in level $B_1$, start (or remain, respectively) charging. That means, we want to be able to serve in total $\mu_t + \mu_{t+1} + X_1 (\sigma_t + \sigma_{t+1})$ battery swaps in time steps t and t+1 and want to keep at least T batteries for swaps in the current time step t and $\mu_{t+1}$ batteries for swaps in the next time step t+1. If the number $N_{2,\tau}$ of batteries in level $B_2$ is lower than

$$N'_{2,\tau} = N'_{1,\tau} + X_2 (\sigma_t + \sigma_{t+1}), \qquad (2)$$

where again $X_2$ is a predefined parameter, then the $N'_{2,\tau}$ - $N_{2,\tau}$ batteries with the highest SOC, which are not in pre-charge level $B_2$, start (or remain, respectively) charging. In this way it should be ensured, that there is always a sufficient number of batteries, which can be quickly charged to level $B_1$, if necessary. If the number of batteries $N_{2,\tau}$ in pre-charge level $B_2$ is higher than $N'_{2,\tau}$ then the $N_{2,\tau} - N'_{2,\tau}$ batteries with the lowest SOC in $B_2$ stop charging (or remain idle, respectively) since SOCs higher than necessary is undesired. Analogous to pre-charge level $B_2$, we proceed with the remaining lower levels $B_3$,....

The invention is illustrated with an example. Instead of directly charging $\mu_t + \mu_{t+1} + 3 \cdot (\sigma_t + \sigma_{t+1})$ batteries to 100% in time step t, only $\mu_t + \mu_{t+1} + \sigma_t + \sigma_{t+1}$ batteries are fully charged, $\sigma_t + \sigma_{t+1}$ further batteries are charged to 90% SOC, and $\sigma_t + \sigma_{t+1}$ further batteries to 70%. If the number of full batteries becomes low (according Eq. (1)), the battery swapping station can react by charging some of the batteries with 90% SOC to 100% SOC and refill the lower battery levels accordingly.

By a suitable setting of the parameters, like the number M of pre-charge levels, the SOCs, $S_2,....S_M$, the numbers $X_1,...,X_M$, and the threshold T, the user demand can be satisfied with high probability and the average SOC can be kept lower than with the standard approach. It is proposed to optimize the parameters based on simulations on historical data.

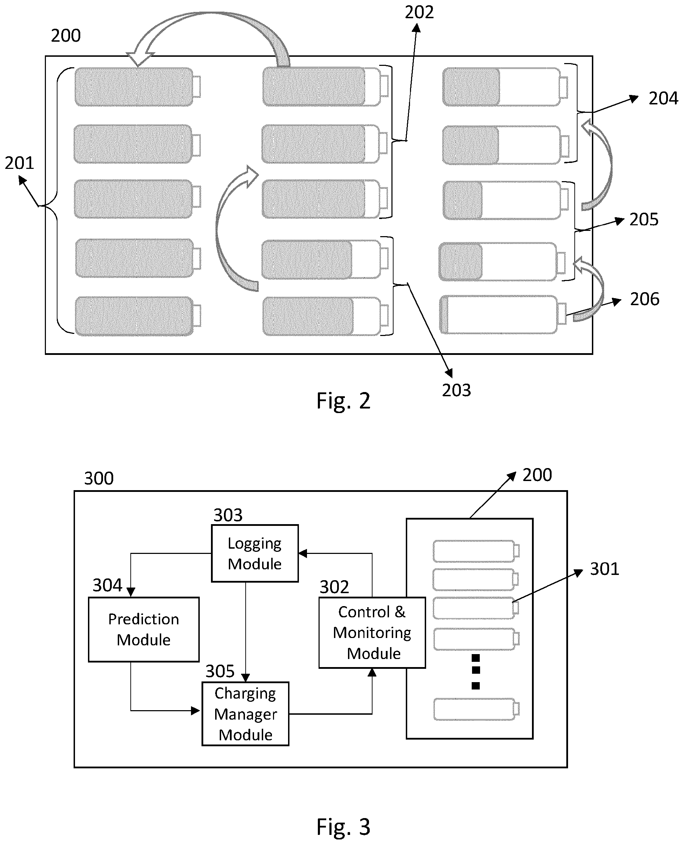

Fig. 2 shows an exemplary embodiment of a schematic of the entirety of batteries 200 with different states of charge in the battery swapping station to serve clients. The batteries are classified into charge levels, 202, 203, 204, 205 and 206. As an example, the battery swapping station may hold five fully charged batteries 201, three batteries 202 in a first pre-charge level, two batteries 203 in a second pre-charge level, two batteries 204 in a fourth pre-charge level, two batteries 205 in a first pre-charge level, and one battery 206 in a fifth pre-charge level, The different pre-charge levels may for example correspond to 90%, 80%, 70%, 60% and 50%. It is to be noted that a charge level does not necessarily mean that all batteries in that charge level have the same actual state of charge. A charge level corresponds to a certain minimum SOC. For example, a charge level of 90% may correspond to actual states of charge between 90% and 100%, a charge level of 80% may correspond to actual states of charge from 80% to 100% and so on. Obviously, other intervals may be defined by the respective charge levels.

When a customer swaps an empty battery for a fully charged battery at the battery swapping station and the number of available fully charged batteries in the battery swapping station falls below the threshold, a battery from the first pre-charge level is allowed to be charged to the fully charged state to meet the required quantity of fully charged batteries, thereby replenishing the required quantity of fully charged batteries. The number of batteries in the first pre-charge level is then, preferably, replenished by charging a battery from the second pre-charge level. Similarly, battery from the subsequent (next lower) pre-charge level is charged to meet the required number of previous (next higher) pre-charge level. In case the threshold number of fully charged battery is still available after the customer exchanged an empty battery, the battery swapping station repeats steps of S4 and S5 discussed earlier for a preset time or until next customer transaction. The actual state of each battery in the battery swapping station is periodically monitored. For replenishing the next higher charge level, it is preferred to start with the battery having the highest actual state of charge of the batteries belonging to the respective charge level from which the higher charge level is replenished.

An exemplary embodiment of a system for charging control of a plurality of batteries in a battery swapping station is shown in Fig. 3. The system 300 comprises a plurality of battery slots 301 to receive batteries. The system 300 further comprises a control and monitoring module 302, a logging module 303, a prediction module 304, and a charging manager 305. The control and monitoring module 302 is configured to perform the charging of the batteries of the battery swapping station based on information received from the charging manager 305, to extract current state information of the stored batteries such as the batteries' state of charge, serial numbers, etc. The logging module 303 is configured to store the state information over a certain period of time in a database. The prediction module 304 is configured to generate predictions of future numbers of swapping requests based on historical data provided by the logging module 303 (and thus the number of required fully charged batteries), and to send the predictions to the programmable charging manager module 302. The predictions might be based on means and standard deviations. The charging manager 305 is configured to determine the charging strategy based on the predictions and the current state of batteries and to send corresponding control signals to the control and monitoring module 302, which implements the control.

Additionally, the control and monitoring module 302 may extract the actual number of fully charged batteries and charge states of the plurality of batteries in the swapping station. The logging module 303 may periodically receive from the control and monitoring module 302 the actual number of fully charged batteries, the charge states of the plurality of batteries in the swapping station, and/or serial numbers of the plurality of batteries in the swapping station. The logging module 303 may store the received information over a period of time in a database. The charging manager module 305 is configured to receive the charge state of plurality of batteries from the control and monitoring module 302 or the logging module 303.

Additionally, the charge manager module 305 decides on charging a plurality of batteries to a second pre-charge level being a state of charge below the state of charge of the first pre-charge level, and further configured to instruct the control and monitoring module 302 to replenish the number of batteries charge to the first pre-charge level when batteries from the first pre-charge level are charged to the fully charged level. Further batteries on additional pre-charge levels may be kept in the battery swapping station. The number of pre-charge levels may vary and be predetermined or assigned at the swapping station.

The logging module 303, the prediction module 304, and/or the charging manager module 305 are either inside or outside the swapping station 300. The logging module 303, the prediction module 304, and/or the charging manager module 305 are in the form of network based cloud computing technology such as a cloud service. The cloud service may be a cloud host to provide cloud management and cloud storage services.

A further implementation is remote monitoring of the battery swapping station. The remote monitoring system may include a radio tower, a GPS navigation or other satellite, a cellular communication tower, a wireless router, a capable remote device, a remote computer system or a server with wireless data connections or any other remote communication that may be communicated wirelessly via the remote system interface.

A computer program configured to realize the method according to the present invention entirely or partially may be recorded on a computer readable recording medium using a computer system. The computer system herein includes OS or hardware such as peripheral devices or the like. The computer readable recording medium may refer to a storage device such as a flexible disk, an opto-magnetic disk, a portable medium such as a CD ROM or the like, a hard disk installed in a computer system or the like. The computer readable recording medium may include a medium that holds a program for a period of time, for example, a volatile memory (RAM) in a computer system that is a server or a client when a program is transmitted via a network such as internet or the like or a communication line such as a telephone line or the like. In addition, the program may be transmitted to another computer system from the computer system in which the program is stored in a storage device or the like via a transmission medium or by transmission waves in the transmission medium.

The description with respect to any of the aspects is also relevant with regard to the other aspects of the invention. Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such features of the other implementations may be desired and advantageous for any given or particular application.

**Claims**

1. A method for control charging of a plurality of batteries in a battery swapping station, the method comprising:

   predicting a required quantity of fully charged batteries and adding a safety margin to determine an initial number of fully charged batteries at a given time (S1);
   setting a threshold of a number of fully charged batteries at the given time (S2);
   charging a plurality of batteries to a full charge level to provide the initial number of fully charged batteries, and a plurality of batteries to at least a first pre-charge level, the first pre-charge level being a lower state of charge than the fully charged level (S3);
   comparing the threshold with an actual number of fully charged battery (S4)s; and
   replenishing, at least partially, the number of fully charged batteries by charging the batteries from the first pre-charge level to the fully charged level (S5).

2. A method according to claim 1, further comprising:

   charging a plurality of batteries to a second pre-charge level being a state of charge below the state of charge of the first pre-charge level, and
   replenishing the number of batteries charge to the first pre-charge level when batteries from the first pre-charge level are charged to the fully charged level.

3. A method according to claim 2, further comprising:

   charging a plurality of batteries to a third pre-charge level being a state of charge level below the second pre-charge level, and
   replenishing the second pre-charge level and the third lower pre-charge level if the plurality of batteries from the second and third pre-charge levels are used to replenish higher pre-charge levels.

4. A method according to any one of claims 1 to 4, further comprising
   determining periodically the required quantity of fully charged batteries and/or the safety margin.

5. A method according to any one of claims 1 to 5,
   wherein the threshold is preset by an operator and/or calculated based on historical data.

6. A system for charging control of a plurality of batteries in a battery swapping station comprises:

   a prediction module configured to predict a required quantity of fully charged batteries and to add a safety margin to determine an initial number of fully charged batteries at a given time;

   a charging manager module configured to receive a threshold of a number of fully charged batteries at the given time from an operator;

   the charging manager module is further configured to receive the predicted required quantity of fully charged batteries from the prediction module and compare the threshold with an actual number of fully charged batteries;

   the charging manager module is further configured to replenish, at least partially, the number of fully charged batteries by charging the batteries from the first pre-charge level to the fully charged level; and

   the charging manager module is further configured to instruct a control and monitoring module to charge a plurality of batteries to full charge level to provide the initial number of fully charged batteries, and a plurality of batteries to at least a first pre-charge level, the first pre-charge level being a lower state of charge than the fully changed level.

7. A system according to claim 6,

   the control and monitoring module configured to extract the actual number of fully charged batteries, charge state of the plurality of batteries in the swapping station, and/or serial numbers of the plurality of batteries in the swapping station.

8. A system according to claim 7,

   a logging module configured to periodically receive from the control and monitoring module the actual number of fully charged batteries, the charge state of the plurality of batteries in the swapping station, and/or serial numbers of the plurality of batteries in the swapping station; and

   the logging module is configured to store the received information over a period of time in a database.

9. A system according to any one of claims 6 to 8,

   the charging manager module configured to receive the charge state of plurality of batteries from the control and monitoring module or the logging module.

10. A system according to any one of claims 6 to 9,

    the charge manager module configured to charge a plurality of batteries to a second pre-charge level being a state of charge below the state of charge of the first pre-charge level, and further configured to replenish the number of batteries charge to the first pre-charge level when batteries from the first pre-charge level are charged to the fully charged level.

11. A system according to any one of claims 8 to 10,

    wherein the logging module, the prediction module, and/or the charging manager module are inside or outside the swapping station.

12. A system according to any one of claims 8 to 11,

    wherein the logging module, the prediction module, and/or the charging manager module are in the form of a cloud service.

13. A computer program configured to control the charging of a plurality of batteries in a battery swapping station comprises the steps of:

    predicting a required quantity of fully charged batteries and adding a safety margin to determine an initial number of fully charged batteries at a given time;

    setting a threshold of a number of fully charged batteries at the given time;

    charging a plurality of batteries to a full charge level to provide the initial number of fully charged batteries, and a plurality of batteries to at least a first pre-charge level, the first pre-charge level being a lower state of charge than the fully charged level;

    comparing the threshold with an actual number of fully charged batteries; and

    replenishing, at least partially, the number of fully charged batteries by charging the batteries from the first pre-charge level to the fully charged level.

**14.** A computer-readable recording medium on which the computer program according to claim 13 is recorded.

**S1** Predict a required quantity of fully charged batteries and add a safety margin to determine an initial number of fully charged batteries at a given time

**S2** Set a threshold of a number of fully charged batteries at the given time

**S3** Charge a plurality of batteries to a full charge level to provide the initial number of fully charged batteries, and a plurality of batteries to at least a first pre-charge level, the first pre-charge level being a lower state of charge than the fully charged level

**S4** Compare the threshold with an actual number of fully charged batteries

Fully charged batteries are above the threshold

**S6** Repeat S4 and S5 for preset time

After preset time has crossed

Fully charged batteries are below the threshold

**S5** Replenish, at least partially, the number of fully charged batteries by charging the batteries from the first pre-charge level to the fully charged level

Fig. 1

Fig. 2

Fig. 3

**EP 4 393 765 A1**

Europäisches Patentamt
European Patent Office
Office européen des brevets

# EUROPEAN SEARCH REPORT

| | Application Number |
| --- | --- |
| | **EP 22 21 7291** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | DE 21 2021 000310 U1 (HUAWEI DIGITAL POWER TECH CO LTD [CN]) 26 October 2022 (2022-10-26) * paragraph [0012] – paragraph [0021]; figures 3-12 * * paragraph [0046] * * paragraph [0055] – paragraph [0061] * * paragraph [0080] – paragraph [0081] * | 1-14 | INV. B60L53/80 H02J7/00 |
| A,D | US 2013/026973 A1 (LUKE HOK-SUM HORACE [US] ET AL) 31 January 2013 (2013-01-31) * the whole document * | 1-14 | |
| A | JP 2022 157333 A (HONDA MOTOR CO LTD) 14 October 2022 (2022-10-14) * the whole document * | 1-14 | |
| | | | TECHNICAL FIELDS SEARCHED (IPC) |
| | | | B60L H02J |

The present search report has been drawn up for all claims

| Place of search | Date of completion of the search | Examiner |
| --- | --- | --- |
| The Hague | 19 June 2023 | Berkus, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 393 765 A1

**ANNEX TO THE EUROPEAN SEARCH REPORT**
**ON EUROPEAN PATENT APPLICATION NO.**

EP 22 21 7291

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2023

| Patent document cited in search report | Publication date | Patent family member(s) | | Publication date |
|---|---|---|---|---|
| DE 212021000310 U1 | 26-10-2022 | CN | 115152122 A | 04-10-2022 |
| | | DE | 212021000310 U1 | 26-10-2022 |
| | | US | 2023043269 A1 | 09-02-2023 |
| US 2013026973 A1 | 31-01-2013 | CN | 103891089 A | 25-06-2014 |
| | | EP | 2737593 A2 | 04-06-2014 |
| | | JP | 6096773 B2 | 15-03-2017 |
| | | JP | 2014529117 A | 30-10-2014 |
| | | TW | 201312895 A | 16-03-2013 |
| | | US | 2013026973 A1 | 31-01-2013 |
| | | US | 2014028089 A1 | 30-01-2014 |
| | | WO | 2013016548 A2 | 31-01-2013 |
| JP 2022157333 A | 14-10-2022 | NONE | | |

EPO FORM P0459

For more details about this annex : see Official Journal of the European Patent Office, No. 12/82